# DEMANDE DE BREVET EUROPEEN

(11) **EP 4 742 085 A1**
(43) Date de publication de la demande: **13.05.2026**
(21) Numéro de dépôt: 25214420.9
(22) Date de dépôt: 07.11.2025
(51) Int. Cl.: G06F 40/30, G06N 3/0475, G06F 11/3668, G06N 20/00

(54) **PROCEDE DE TEST D'UN GRAND MODELE DE LANGAGE MIS EN OEUVRE AU SEIN D'UN AGENT CONVERSATIONNEL**

(30) Priorité: 07.11.2024 FR 2412218
(71) Demandeur: Giskard AI, 93500 Pantin (FR)
(72) Inventeur: MESSIAEN, Kevin, 59510 HEM (FR); LE JEUNE, Pierre, 75020 PARIS (FR); DORA, Matteo, 75011 PARIS (FR); JOHN MATHEWS, Jean-Marie, 77210 AVON (FR)
(74) Mandataire: Oak & Fox

(57) **Abrégé**

Procédé mis en œuvre par ordinateur pour tester la performance d'un grand modèle de langage (LLMt) comportant :
▪ Réception d'un ensemble de données (ENS₁) provenant d'au moins une source de données (Si) à partir d'une période temporelle ;
▪ Génération (GEN₁) d'au moins un premier message (M₁) à partir de l'ensemble de données reçues (ENS₁) et par application d'au moins un premier grand modèle de langage de variations (LLM₁) ;
▪ Génération (GEN₂) d'une pluralité de messages (M₁) par application d'au moins un grand modèle de langage de variations ;
▪ Génération (GEN3) d'une pluralité d'échanges de messages ({SEQ₁ₖ}_{k∈[1 ; N]}) par application d'un grand modèle de langage à tester (LLMt) ;
▪ Calcul (TEST₁) d'un premier indicateur d'erreur (IND₁) ;
▪ Calcul (TEST₂) d'un second indicateur de conformité (IND₂).

## Description

### Domaine de l'invention

Le domaine de l'invention se rapporte à celui des tests générés automatiquement d'agents conversationnels mettant en œuvre des grands modèles de langage afin de renforcer leur robustesse au cours du temps.

### État de la technique

Actuellement, il existe des solutions permettant d'interagir avec un agent conversationnel, appelé « chatbot » dans la littérature anglosaxonne, afin d'aider un humain dans la collecte d'informations spécifiques. Ces agents conversationnels nécessitent la précision d'un contexte selon la manière dont on souhaite les exploiter. Un problème connu est la capacité d'un agent conversationnel à offrir un service persistant dans le temps capable de prendre en considération des variations liées à de nouveaux concepts, de nouveaux concepts émanant d'une actualité publiée sur des sources de données accessibles depuis un réseau d'échanges de données tel qu'un internet.

### Résumé de l'invention

Selon un premier aspect, l'invention concerne un procédé mis en œuvre par ordinateur pour tester la performance d'un grand modèle de langage mis en œuvre au sein d'un agent conversationnel comportant :
▪ Réception d'un ensemble de données provenant d'au moins une source de données, lesdites données correspondant à un encodage de séquences de symboles discrets en langage naturel, l'ensemble de données étant préalablement extrait d'au moins la source de données automatiquement selon une fréquence donnée et à partir d'une sélection d'une langue naturelle ;
▪ Génération d'au moins un premier message de test à partir de l'ensemble de données reçues et par application d'au moins un premier grand modèle de langage configuré avec un contexte principal comportant une définition d'un langage et d'une instruction donnée propre à la source de données ;
▪ Génération d'une pluralité de séquence de variations par application d'au moins une pluralité de grands modèles de langage de variations configurés à partir d'une pluralité de contextes secondaires permettant de générer d'une part les variations du premier message de test et les réponses associées générées par au moins un grand modèle de langage ;
▪ Génération d'une pluralité de séquences de messages par application d'un grand modèle de langage à tester, une séquence comportant une entrée et la sortie générée correspondante d'un grand modèle de langage ;
▪ Calcul d'un premier indicateur d'erreur évaluant un ensemble de critères d'erreurs par comparaison des séquences produites par le grand modèle de langage à tester et des séquences de variations ;
▪ Calcul d'un second indicateur de conformité à partir d'un domaine de conformité comportant des règles de conformité définissant des ensembles de validité des séquences produites par le grand modèle de langage à tester.

Un avantage de l'invention est de permettre d'évaluer la robustesse d'un agent conversationnel au cours du temps en générant des tests automatiquement. Ces tests permettent de diagnostiquer et d'identifier des domaines de validité d'un agent conversationnel. Les tests permettent en outre de redéfinir ou préciser un prompt d'un agent conversationnel afin qu'il puisse générer des réponses automatiquement qui soient fiables.

Selon un mode de réalisation, les réponses des séquences de variations sont générées par la pluralité de grands modèles de langage de variations. Un avantage est d'étendre le domaine de test.

Selon un mode de réalisation, les réponses des séquences de variations sont générées par au moins un grand modèle de langage d'évaluation considérant en entrée une variation produite par un grand modèle de langage de variation et produisant en sortie une réponse associée.

Selon un mode de réalisation, le premier message est une première séquence de symboles en langage naturel définissant une question dans une langue naturelle.

Selon un mode de réalisation, le procédé est exécuté à une fréquence prédéfinie sur un ensemble de sources prédéfinies.

Selon un mode de réalisation, la fréquence est utilisée pour sélectionner des données des sources de données publiées à partir d'une date donnée.

Selon un mode de réalisation, chaque source est associée à une fréquence donnée.

Selon un mode de réalisation, la source de données est sélectionnée préalablement à partir d'un localisateur de ressources uniformes au sein d'un réseau de données et d'un nom d'organisation permettant de sélectionner une sous partie des données accessibles depuis le localisateur de ressources uniforme.

Selon un mode de réalisation, la réception de données provient de l'une des sources de données caractérisé par :
▪ Une source de données accessibles depuis un réseau social à partir d'un procédé d'authentification ;
▪ Une source de données définissant des commentaires ou des avis d'une pluralité d'individus,
▪ Une source de données d'informations d'accès libre.
▪ Une source de données définissant une ou plusieurs base(s) de données internes à une organisation telle qu'une base de produits ou d'articles, une base de services, ou encore une base de véhicules en stock ;
▪ Une source de données définissant des données de conversations d'agent(s) conversationnel(s) enregistrées en production ou dans un environnement de test,
▪ Une source de données définissant une documentation électronique.

Un avantage est de permettre de générer des tests dont l'hétérogénéité est obtenue grâce à la diversité des sources sélectionnées.

Selon un mode de réalisation, le procédé comprend la génération d'une alerte lorsqu'au moins un premier indicateur d'erreur et/ou un second indicateur de conformité est généré.

Selon un mode de réalisation, le procédé comprend la configuration d'un accès à une source de données.

Selon un mode de réalisation, le procédé comprend l'exécution d'un grand modèle de langage de traitement des données des sources afin de filtrer, formater et/ou normaliser les ensembles de données extraits des sources de données.

Un avantage est d'obtenir des messages simulant un type de question susceptible de survenir, par exemple en introduisant automatique un pronom personnel de type « je ».

Selon un mode de réalisation, chaque séquence d'échanges comprend une séquence de symboles en langage naturel définissant une question, ladite séquence de symboles en langages naturel étant produite à partir d'au moins un premier grand modèle de langage de variations et d'une réponse produite par utilisation d'un grand modèle de langage à tester.

Selon un mode de réalisation, le contexte principal un premier grand modèle de langage de variations comprend la définition d'un domaine associé à un champ lexical ou à un ensemble de mots clefs. Le contexte est par exemple un prompt d'un LLM.

Selon un mode de réalisation, un premier grand modèle de langage de variations comprend un contexte configuré permettant de générer automatiquement une séquence de symboles discrets dans un langage naturel à partir d'une ou plusieurs paraphrases du premier message.

Selon un mode de réalisation, un second grand modèle de langage de variations comprend un contexte configuré permettant de générer automatiquement une séquence de symboles discrets dans un langage naturel à partir d'une traduction du premier message dans une autre langue naturelle.

Selon un mode de réalisation, un troisième grand modèle de langage de variations comprend un contexte configuré permettant de générer automatiquement une séquence de symboles discrets dans un langage naturel à partir d'une exagération du premier message.

Selon un mode de réalisation, un quatrième grand modèle de langage de variations comprend un contexte configuré permettant de générer automatiquement une séquence de symboles discrets dans un langage naturel à partir d'un changement de ton du premier message.

Selon un mode de réalisation, un cinquième grand modèle de langage de variations comprend un contexte configuré permettant de générer automatiquement une séquence de symboles discrets dans un langage naturel à partir d'une introduction d'au moins une insulte dans le premier message.

Selon un mode de réalisation, un sixième grand modèle de langage de variations comprend un contexte configuré permettant de générer automatiquement une séquence de symboles discrets dans un langage naturel à partir d'une introduction d'au moins une erreur dans le premier message, ladite erreur étant par exemple une erreur d'orthographe ou grammaticale dans une langue naturelle.

Selon un mode de réalisation, le procédé comprend la génération d'une pluralité de variations du message pour chaque grand modèle de variations de langage de variation.

Un avantage est de permettre de générer une très grande variété de tests unitaires d'un LLM de test basée sur des variations du messages avec une grande hétérogénéité et une grande diversification du contexte et prenant en considération des données évoluant dans le temps.

Selon un mode de réalisation, le domaine de conformité est défini à partir de la réponse d'un troisième grand modèle de langage configuré à partir d'un contexte définissant un domaine de conformité.

Selon un mode de réalisation, le domaine de conformité est défini à partir d'un ensemble de règles définissant des ensembles de validité de séquences de symboles en langage naturel prédéfinies et/ou des ensembles d'invalidité de séquences de symboles en langage naturel prédéfinies.

Selon un mode de réalisation, l'ensemble de règles comprend la spécification d'une langue de réponse, la spécification de thématique à exclure du champ de la réponse ou qu'un lien vers une ressource d'un réseau de données doit être présent dans un type de réponse donné.

Selon un mode de réalisation, l'ensemble de règles définissant des ensembles d'invalidité comprend une base de connaissance listant un ensemble de thèmes, de catégories, de labels ou de mots clefs définissant chacun ou chacune une séquence de symboles discrets dans un langage naturel et éventuellement des variations de cette séquence.

Selon un mode de réalisation, le domaine de conformité est généré en partie automatiquement à partir du nom de l'organisation, de règles et du contexte principal du premier grand modèle de langage.

Selon un mode de réalisation, un critère d'erreur du premier indicateur d'erreur comprend une vérification qu'un ensemble de concepts en commun sont présents d'une part dans la réponse produite de la séquence de variation produite et d'autre part dans la réponse produite par le grand modèle de langage à tester auquel une variation du premier message a été fournie.

Selon un mode de réalisation, lorsqu'un indicateur d'erreur et/ou un indicateur de conformité est généré, une notification est émise automatiquement vers un serveur distant ou une ressource mémoire d'un équipement sur lequel est exécuté le procédé.

Selon un mode de réalisation, lorsqu'un indicateur d'erreur et/ou un indicateur de conformité est généré, un compteur d'erreurs est généré pour produire une évaluation de l'agent conversationnel sur une période donnée.

Selon un autre aspect, l'invention se rapporte à un produit programme d'ordinateur comprenant des instructions qui, lorsqu'elles sont exécutées par un ordinateur, amènent celui-ci à exécuter le procédé de l'invention.

Selon un autre aspect, l'invention se rapporte à un support lisible par ordinateur sur lequel est stocké un programme d'ordinateur comprenant des instructions qui, lorsqu'elles sont exécutées par un ordinateur, amènent celui-ci à exécuter le procédé de l'invention.

Selon un autre aspect, l'invention concerne un système comportant un terminal électronique utilisateur comportant une interface utilisateur, au moins un serveur de données hébergeant toute ou partie d'une première source de données, un second serveur de données comportant au moins un calculateur et une mémoire au sein duquel le grand modèle de langue à tester est exécuté et au moins un troisième serveur de données comportant des moyens pour exécuter un modèle de langage de variation et comportant un calculateur pour exécuter les étapes du procédé de l'invention.

Selon un mode de réalisation, le système comprend un quatrième serveur de données comportant au moins un calculateur et une mémoire au sein duquel le grand modèle de langue d'évaluation est exécuté.

### Brève description des figures

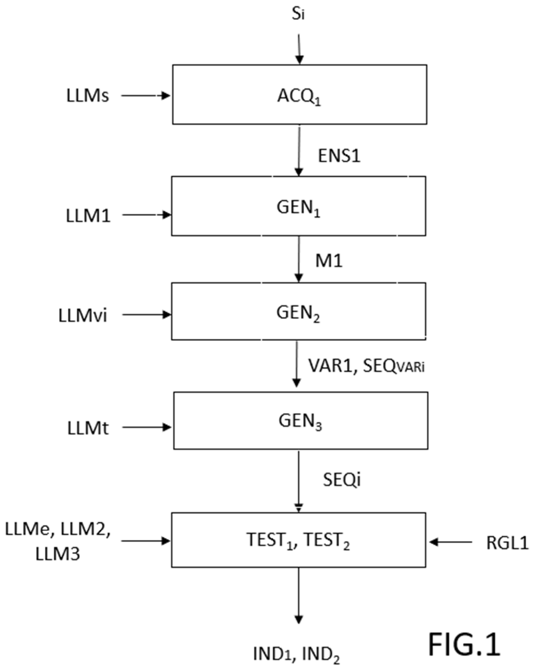

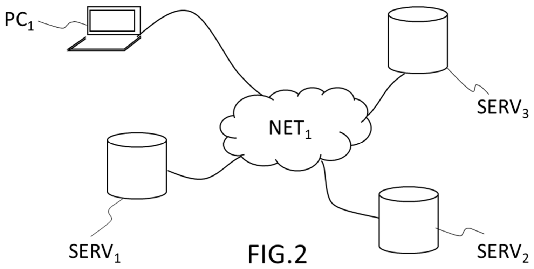

D'autres caractéristiques et avantages de l'invention ressortiront à la lecture de la description détaillée qui suit, en référence aux figures annexées, qui illustrent :
▪ Figure 1 : un mode de réalisation des étapes du procédé de l'invention ;
▪ Figure 2 : un mode de réalisation d'un système de l'invention.

On appelle un « grand modèle de langage » un LLM désignant dans la terminologie anglosaxonne un « large langage model ». Un tel modèle est un modèle d'apprentissage automatique possédant un grand nombre de paramètres. Selon certaines réalisations, ce sont des réseaux de neurones profonds entraînés sur de grandes quantités de textes non étiquetés utilisant l'apprentissage auto-supervisé ou l'apprentissage semi-supervisé.

On appelle un « grand modèle de langage à tester » un LLM exploité par un agent conversationnel dont on souhaite tester les limites, les effets de bords, sa robustesse à produire des réponses cohérentes, vraies et non biaisées au cours du temps. Il est noté LLMₜ.

On appelle un « grand modèle de langage de variations » un LLM configuré de sorte à produire des variations d'un texte à partir d'un paramétrage donné. Il est noté LLMᵥₖ selon le i^{ème} LLM de variation comportant un paramétrage donné. Lorsque le texte est une question, le LLMᵥₖ produit la variation de la question vis-à-vis d'une question d'origine et éventuellement la réponse à la variation. Dans ce dernier cas, un LLMᵥₖ produit une séquence de variations SEQ_{VARi} comportant un premier message définissant une entrée du grand modèle de langage de variation LLMᵥₖ, par exemple sous la forme d'une question, et comportant une réponse au premier message produit par le LLMᵥₖ.

On appelle un « grand modèle de langage d'évaluation » ou « un grand modèle de langage de référence » un LLM configuré de sorte à comparer le résultat produit en réponse à une requête avec le résultat produit lors de l'exécution d'un grand modèle de langage à tester LLMₜ soumis à la même requête/entrée. Ce grand modèle de langage de référence/évaluation est noté LLMₑ. Selon un mode de réalisation, un grand modèle d'évaluation LLMₑ peut être du même type qu'un même grand modèle de langage de variation LLMᵥₖ utilisé pour générer les variations VARᵢ selon un critère donné qui produit les entrées et les sorties du LLMₖ à partir d'un message M₁, toutefois le prompt d'un grand modèle de langage d'évaluation LLMₑ diffère du prompt d'un grand modèle de langage de variation LLMᵥₖ.

Dans ce dernier cas, le procédé de l'invention permet de comparer le résultat d'une exécution du modèle à tester LLMₜ avec ce qui est généré par le LLM de variation LLMᵥᵢ. Les comparaisons peuvent uniquement se baser sur les réponses produites par chaque modèle LLMₜ, respectivement LLMᵥₖ à partir d'entrées différentes ou de mêmes entrées.

On appelle un « grand modèle de langage de traitement des données des sources » un LLM configuré de sorte à traiter les données extraites des sources de données par une homogénéisation, une normalisation, un filtrage ou un formatage des données selon un paramétrage donné du contexte du LLM.

On appelle « contexte » d'un LLM un « prompt » permettant de préciser ou de paramétrer une description textuelle de la tâche qu'un algorithme d'apprentissage machine tel qu'un LLM doit effectuer. Un prompt peut être accessible depuis une interface utilisateur ou directement programmé dans un langage de programmation. Dans le cadre de l'invention, un « LLM configuré » fait référence à un LLM pour lequel le prompt ou le contexte est paramétré ou précisé.

Un prompt est également appelé un « invite de commande » ou un « invite ».

La figure 1 représente un exemple de réalisation du procédé de l'invention. L'exemple est détaillé pour une organisation ayant une désignation et par exemple un identifiant. Dans l'exemple, l'organisation exploite un agent conversationnel mis en oeuvre au sein d'un service numérique proposé à une pluralité d'utilisateurs. Le service est accessible depuis au moins un serveur de données SERV₁. Les utilisateurs accèdent au service depuis un client PC₁ qui peut être un terminal électronique tel qu'un PC, une tablette, ou un téléphone intelligent ou un ordiphone.

Une organisation peut être une entreprise, une association, une personne physique, un laboratoire ou tout autre forme de communauté d'utilisateurs ayant défini ensemble un service numérique accessible depuis un réseau de données NET₁, tel que le réseau internet.

Selon différents exemples, l'organisation peut être un service public, un assureur, une banque, une école, un voyagiste, etc. offrant un service numérique accessible depuis un réseau de données NET₁. Le service numérique peut être ouvert, en accès libre depuis une URL, signifiant dans la terminologie anglosaxonne « Uniform Resource Locator » et désignant plus généralement un localisateur de ressources uniforme. Un tel accès permet au sein d'un réseau de données NET₁ d'accéder à des données. Selon un autre exemple, le service numérique peut être fermé est mis en ligne au sein d'un réseau de données privé tel qu'un intranet ou un réseau nécessitant une authentification d'utilisateurs.

Le procédé vise pour chaque organisation, et donc pour chaque identifiant représentant une organisation, à récupérer des données d'un ensemble de sources de données Sᵢ afin de tester la performance et la robustesse d'un agent conversationnel LLMₜ. Par « performance d'un agent conversationnel », on entend sa capacité à produire des réponses structurées, cohérentes, vraies ou adressant une réponse donnée à une question donnée ou encore parfois à redéfinir le périmètre ou le domaine dans lequel il est capable de répondre afin qu'un utilisateur reformule une question, etc.

On rappelle qu'un agent conversationnel est généralement mis en œuvre à partir d'un LLM configuré dans un domaine particulier. A cet effet un contexte, également appelée « prompt » permet d'enrichir par exemple le domaine d'entrainement de l'algorithme d'apprentissage machine. Le procédé de l'invention permet de mettre à jour le domaine au cours du temps à partir d'un ensemble de source de données évoluant au cours du temps et tester le domaine afin que ce dernier soit en mesure de conserver des performances ou améliorer ses performances dans un domaine au cours du temps.

### Réception des données des sources

Le procédé de l'invention permet de générer des tests automatiquement qui couvrent des spécificités d'un domaine d'utilisation donné qui peuvent évoluer dans le temps. Un des objectifs de l'invention est de mettre en place une veille active automatisée des contextes via des sources hétérogènes évoluant avec le temps.

A cet effet, le procédé de l'invention comprend une première étape AQC₁ qui correspond à la réception d'un ensemble de données ENS₁ provenant d'au moins une source de données Si.

L'ensemble de données ENS₁ comprend un ensemble de séquences de symboles en langage naturel. Ces dernières séquences peuvent correspondre à un mot, un chiffre ou un nombre, une phrase, un paragraphe comportant une pluralité de phrases, un texte provenant d'un document tel qu'un fichier au format .docx, .pdf, ou tout autre format de texte, ou une page web par exemple au format html, xml ou tout autre format permettant de contenir et structurer des données et les afficher dans au sein d'un navigateur.

Les sources Si peuvent correspondre à différents conteneurs de données accessibles depuis différents localisateurs de ressources numériques notés URLᵢ au sein d'un réseau de données NET₁, tel qu'internet. La i^{ème} source de données Sᵢ est accessible depuis une URLᵢ. Selon un exemple, une source Sᵢ peut être accessible uniquement au moyen d'un localisateur de ressource URLᵢ. Selon un autre exemple, les sources Sᵢ sont accessibles au moyen d'un localisateur de ressource URLᵢ et d'au moins une autre donnée. Selon un premier exemple, une donnée d'authentification est utilisée pour accéder à une source de données Sᵢ. La donnée d'authentification peut être par exemple un login et un mot de passe ou une authentification à deux facteurs ou encore tout autre moyen d'identification ou d'authentification. Selon un exemple, de réalisation, la source Si est une URL d'une page web d'une organisation.

Selon un mode de réalisation, la source de données peut être une base de données interne à une organisation telle qu'une base de produits ou d'articles, une base de services, une documentation électronique ou encore une base de véhicules en stock. Toute autre type de base de données peut être configurée afin de définir une source de données exploitable.

Selon un exemple, la base de données est accessible à partir d'un connecteur tel qu'une API ou plus généralement à partir d'un protocole d'échange de données. Selon un exemple, les données peuvent être des documents au format .pdf, .docx.

Le procédé comprend une étape d'extraction de données d'intérêts au sein desdits documents à partir des données générées par les variations produites par les LLM de variation. Le procédé comprend la génération de nouvelles variations à partir des données d'intérêt identifiés dans le document.

Le procédé comprend par exemple la génération d'un fichier de ressources externes tels qu'un fichier au format .csv, .excel ou toute autre format. Ce fichier comprend une liste de ressources telles que des chemins d'accès, des URL ou tout autre indication permettant de localiser et identifier une ressource de données.

Selon un mode de réalisation, les sources utilisées pour générées des variations sont exogènes ou externes au système et comprennent au moins deux sources stockées dans deux serveurs différents.

Selon un mode de réalisation, les sources utilisées pour générées des variations sont exogènes ou externes au système et comprennent au moins deux sources accessibles depuis deux protocoles d'échange de données différentes.

Selon un mode de réalisation, les sources utilisées pour générées des variations sont exogènes ou externes au système et comprennent au moins deux sources accessibles depuis systèmes d'authentification différents.

Selon un mode de réalisation, les sources utilisées pour générées des variations sont exogènes ou externes au système et comprennent au moins deux sources accessibles un premier système d'authentification et depuis un second système sans système d'authentification.

Selon un mode de réalisation, les sources utilisées pour générées des variations sont exogènes ou externes au système et comprennent au moins deux sources de formats différents.

Selon un mode de réalisation, une des sources de données utilisées pour générer des variations est une base de données ou un fichier d'erreurs précédemment identifiées dans le système de l'invention.

Selon un mode de réalisation, le nombre de variations d'un type ou produit par LLM est déterminé selon la dimension d'un domaine de validité des variations. Selon un exemple, le domaine est défini par un domaine de test ou un segment du domaine de test. Ce domaine de test peut être par exemple le domaine de conformité ou il peut l'inclure.

Selon un autre exemple de réalisation, la source de données peut correspondre à des données de conversations d'agent(s) conversationnel(s) enregistrées en production ou dans un environnement de test. En effet, cela permet d'utiliser les thématiques réellement produites par les utilisateurs de l'agent conversationnel comme source de génération de données.

Selon un exemple, la source de données Si correspond à une partie des données accessibles depuis un localisateur de ressource URLᵢ via un réseau de donnés NET₁. La partie peut correspondre à un ensemble de commentaires ou d'avis d'une page web, un titre d'un article, un article.

Selon un mode de réalisation, une configuration donnée permet de paramétrer les données qui sont extraites d'une source donnée Sᵢ. Ainsi, si une pluralité de sources de données Sᵢ est utilisée dans le cadre de l'exécution du procédé de l'invention, alors une pluralité de paramétrages peut être réalisée de sorte que les données ENS₁ de chaque source Si soient reçues. La réception, la collecte et l'enregistrement des données peut être réalisée au sein d'un serveur de données SERV₁. Selon un exemple, chaque paramétrage comporte au moins le nom d'une organisation, une URL et une fréquence permettant de définir une période d'extraction des données au sein de la source de données.

Selon un mode de réalisation, les données sont reçues par au moins une mémoire d'un terminal électronique tel qu'un ordinateur ou un serveur. Selon différentes réalisations, l'équipement qui reçoit les données de chaque source Sᵢ est un équipement qui comporte à minima une mémoire et un calculateur. Les données ENS₁ sont reçues et enregistrées pour être exploitées par un calculateur. Selon un exemple, une base de données est mise en œuvre et exploitée pour stocker de manière ordonnée les données ENS₁ provenant des différentes sources Si. Selon un exemple, la base de données permet de stocker les données et de les ordonner chronologiquement afin de pouvoir vérifier si les données d'une source Sᵢ ont changé au cours du temps et le cas échéant de comparer dans quelle mesure elles ont été modifiées entre deux instants différents.

Selon un mode de réalisation, les données ENS₁ sont reçues à intervalle de temps régulier, par exemple selon une période prédéfinie, une période de l'ordre de l'heure, de la journée, de la semaine ou du mois, voire de l'année peut être définie.

Selon un mode de réalisation, la réception des données est précédée d'une étape initiée par un équipement donné générant des requêtes auprès des différentes sources Si pour extraire des données présentes dans chaque source Sᵢ. Dans un exemple où un serveur est configuré pour récupérer les données des différentes sources Sᵢ, des requêtes sont définies pour périodiquement récupérer des données provenant de différentes sources distribuées sur un réseau de données NET₁ et accessibles depuis ce dernier.

Selon un mode de réalisation, une fonction d'analyse est exécutée sur le serveur SERV₁ pour analyser si un ensemble de données ENS₁ est enregistré et exploité par le procédé de l'invention ou s'il n'est pas enregistré. Certains critères peuvent être définis afin de paramétrer la fonction d'analyse. Selon un exemple, la fonction d'analyse compare des sujets, des thèmes, des mots clefs, des concepts ou encore calcule un score de similarité entre deux ensembles récupérés à deux dates différentes ou entre l'ensemble de données et un ensemble de référence.

Un intérêt est de récupérer des données d'un ensemble de sources Sᵢ qui soient hétérogènes afin de générer des variétés de questions différentes définissant des entrées à l'agent conversationnel pour éprouver sa robustesse à différentes variations susceptibles de se produire au cours du temps selon les thèmes et les sujets liés à l'actualité par exemple.

Selon un mode de réalisation, un ensemble de requêtes sont générées afin de récupérer une grande variété d'ensemble de données de différentes sources.

On comprend que des données textuelles provenant de commentaires ou d'avis ne seront pas formulées de la même manière qu'un site web publiant des informations institutionnelles ou des revues numériques éditoriales. Les différences de tons, les différents registres de langage, notamment les langages familiers et les langages soutenus, la présence de fautes d'orthographe ou d'absence de fautes d'orthographe permettent de générer différentes entrées permettant de tester largement le grand modèle de langage à tester LLMₜ. Enfin un intérêt de retenir les données présentant une actualisation de sujets en fonction de la date de publication permet de mettre à jour continument le contexte et donc de mettre à jour l'ensemble des données définissant le prompt d'un agent conversationnel et de vérifier plus généralement que l'agent conversationnel LLMₜ a accès à des données à jour.

### Etape de génération d'un message de test

Le procédé comprend une seconde étape permettant de générer au moins un premier message M₁ à partir de l'ensemble de données reçues ENS₁ et par application d'au moins un premier grand modèle de langage LLM₁ configuré avec un contexte principal CT₁ comportant une définition d'un langage et d'une description définissant une instruction. Dans le cas le plus général, le procédé permet de générer une pluralité de messages M₁ de sorte que différents tests du grand modèle de langage à tester LLMₜ soient réalisés.

Dans cette étape, le procédé de l'invention met en œuvre un algorithme d'apprentissage machine pour produire une question directement exploitable par l'agent conversationnel LLMₜ à tester. Un intérêt d'exploiter un grand nombre de sources hétérogènes est de produire une variété de questions tests pour tester un LLMₜ à tester. Le LLM₁ est configuré pour générer des questions au LLMₜ.

Afin de générer des questions permettant de tester efficacement l'agent conversationnel à tester LLMₜ, un contexte est défini permettant de formater la question à générer dans un domaine et une langue donnée.

La langue permet notamment d'extraire des données dans la langue configurée ou de traduire le contenu des données extraites et reçues ENS₁ pour tester le LLMₜ dans la langue déterminée.

Le domaine peut se rapporter à un domaine en général tel qu'un domaine scientifique, économique, politique ou un domaine relatif à un métier donné tel que celui de la banque, de l'artisanat, de la parfumerie, de l'assurance ou de l'automobile, etc. Le domaine peut, en outre, se rapporter à une activité d'une organisation, telle qu'une activité de vente en détail, une activité de formation, une activité de service, etc.

Un avantage est de permettre de personnaliser la question selon un domaine donné. Par exemple, le domaine peut être le « service après-vente de produits cosmétiques » ou « l'assistance aux personnes ayant subi un accident » ou encore le domaine du « pré-diagnostic médical pour aiguiller un individu dans le service d'urgence adéquate ».

Dans ces cas, les données extraites ENS₁ sont utilisées pour générer une entrée propre à un domaine particulier grâce au LLM₁.

Par exemple, si une source de données Si précise que « *les taux de remboursement d'une assurance pour un médicament est passé de 100* % à 50 % » et que le domaine est celui de « l'assistance aux personnes ayant subi un accident », le LLM₁ peut générer une question du type : « *Puis-je bénéficier d'un taux de remboursement de 100* % *de* ma *prise en charge dans le cas d'un accident du travail ?* ». Ainsi, le LLM₁ est configuré pour générer des réponses à la première personne appliquées au cas d'une assistance ou d'une prise en charge en considérant la donnée produite par la source de donnée considérée.

### Génération des variations

Selon un mode de réalisation, au moins un algorithme d'apprentissage machine tel qu'un grand modèle de langage LLMᵥ₁ est configuré pour générer des variations du message de test M₁. Les variations générées sont notées VARᵢ. Un intérêt de la génération de variations VARᵢ est de permettre d'étendre le domaine de test d'un agent conversationnel, ledit agent conversationnel mettant en œuvre un grand modèle de langage LLMₜ à tester.

Les variations correspondent à des variations du messages M₁. Selon un mode de réalisation, chaque grand modèle de langage de variation LLMᵥᵢ génère une séquence SEQ_{VARi} comportant la variation VARᵢ du message M₁ et la réponse associée.

Selon un mode de réalisation, une pluralité de grands modèles de langage {LLMᵥᵢ}_{i∈[1 ;N]} sont configurés pour générer des variations du message de test M₁. Dans cet exemple, N modèles sont mis en œuvre. Un intérêt de cette solution est de configurer des variations VARᵢ selon des critères différents afin de générer un domaine de test le plus exhaustif possible.

Différents exemples sont décrits, toutefois l'invention ne se limite pas aux exemples cités.

Selon un premier exemple, un premier grand modèle de langage LLMᵥ₁ est configuré pour générer une pluralité de reformulations ou de paraphrases du message M₁. Ce modèle est configuré avec un prompt ou un contexte permettant de favoriser la production de nouveaux messages M₁ produits à partir d'un message M₁ en faisant varier les mots de la séquence de symboles discrets tout en conservant le sens. A cette fin, la modification et le remplacement de termes par des synonymes peut être réalisé au sein du message M₁ ou des reformulations d'expressions ou encore des équivalents peuvent être produits.

Selon un second exemple, un second grand modèle de langage LLMᵥ₂ est configuré pour générer une pluralité de variations VARᵢ basées sur des traductions totales ou partielles du message M₁ d'origine. Ce modèle est configuré avec un prompt ou un contexte permettant de favoriser la production de nouveaux messages M₁ produits à partir d'un message M₁ en faisant varier les traductions de certaines expressions ou encore l'ensemble des mots de la séquence de symboles discrets formant le message M₁ tout en conservant le sens de ce dernier. A cette fin, différentes langues peuvent être configurées de sorte à produire des variations correspondantes à une pluralité de traductions de tout ou partie du message M₁ dans une pluralité de langues. Selon un exemple, des mélanges de traductions de certaines parties d'un même message sont produites pour générer un message comportant différentes portions de texte exprimées dans des langues différentes.

Selon un troisième exemple, un troisième grand modèle de langage LLMᵥ₃ est configuré pour générer une pluralité de variations VARᵢ basées sur des exagérations du message M₁ d'origine. Ce modèle est configuré avec un prompt ou un contexte permettant de favoriser la production de nouveaux messages M₁ produits à partir d'un message M₁ en faisant varier les exagérations de certains mots, certaines expressions ou encore certaines phrases, voir l'ensemble des mots de la séquence de symboles discrets formant le message M₁. A cette fin, certains synonymes ou équivalents trop proches de termes d'origine du message M₁ ne sont pas retenus au profit de remplacement de termes exagérant une caractéristique définie par le sens d'un mot ou correspondant à une emphase d'un terme ou d'un groupe de mots. L'exagération peut également s'appliquer à un chiffre, une valeur, une estimation, un pourcentage, une statistique ou toute autre quantité exprimée dans un message. Ces variations correspondent à une pluralité de séquences susceptibles de modifier le sens du message M₁ ou du moins de le faire varier autour du sens défini par le premier message M₁. Le troisième grand modèle de langage LLMᵥ₃ peut ainsi générer une modification de la phrase suivante « *j'ai un souci avec mon ordinateur* » en « *j'ai un gros bug avec mon PC* ».

Selon un quatrième exemple, un quatrième grand modèle de langage LLMᵥ₄ est configuré pour générer une pluralité de variations VARᵢ basées sur des changements de ton du message M₁ d'origine. Ce modèle est configuré avec un prompt ou un contexte permettant de favoriser la production de nouveaux messages M₁ produits à partir d'un message M₁ en faisant varier les tons de certains groupes de mots, certaines expressions ou encore certaines phrases, voir l'ensemble des mots de la séquence de symboles discrets formant le message M₁. Les changements de tons peuvent traduire une exaspération, un ordre, un énervement, une colère ou encore un calme masquant une retenue d'un individu, etc.

A cette fin, le LLMᵥ₄ permet de modifier les temps des verbes, les pronoms et les intonations ou encore la forme interrogative ou exclamative de groupes de mots de la séquence de symboles discrets formant le message M₁

Le quatrième grand modèle de langage LLMᵥ₄ peut ainsi générer une modification de la phrase suivante « *peux-tu m'aider à réserver un train pour ce soir pour aller à Nantes en partant de Paris ? Merci par avance* » en *« donne-moi les horaires pour les Paris-Nantes ce soir ou je me déconnecte à tout jamais* »*.*

Selon un cinquième exemple, un cinquième grand modèle de langage LLMᵥ₅ est configuré pour générer une pluralité de variations VARᵢ basées sur des modifications du message M₁ ou l'introduction dans le message d'origine M₁ de mots d'un registre donné, tels que des mots vulgaires ou des insultes. Ce modèle est configuré avec un prompt ou un contexte permettant de favoriser la production de nouveaux messages M₁ produits à partir d'un message M₁ en faisant varier le vocabulaire de certains groupes de mots, certaines expressions ou encore certaines phrases, au sein du message M₁. Les modifications du message M₁ peuvent comprendre des changements de mots d'un registre donné par des mots d'un autre registre ou encore par leur introduction sans remplacement.

Le cinquième grand modèle de langage LLMᵥ₅ peut ainsi générer une modification de la phrase suivante « *J'aimerais connaitre les taux de rémunération d'assurance-vie des contrats souscrits ces 3 derniers mois* » en *« Donne-moi les taux de rémunérations des assurances-vie, grand fou ».*

### Combinaison de grands modèles de langage pour produire des variations

Selon un mode de réalisation, les variations VARᵢ sont produites à partir de deux modèles de langages de variation LLMᵥₖ assemblés en cascades. Plus généralement, une pluralité de grands modèles de variations peut être configurée en cascade afin de produire une grande variété de variations hétérogènes.

Selon cette conception, la sortie d'un grand modèle de langage de variation peut permettre de définir une entrée d'un autre grand modèle de langage de variation LLMᵥₖ. Cette configuration permet d'enrichir les variations du message d'origine M₁. Selon un exemple, le second modèle de langage de variation LLMᵥ₂ et le troisième modèle de langage de variation LLMᵥ₃ peuvent être mis en oeuvre en cascade de sorte que des exagérations des traductions partielles ou totale du message M₁ soient produites.

### Variations produites par d'autres algorithmes

Selon un mode de réalisation, un encodage utilisant des caractères non conventionnels tels que des symboles peut être utilisés pour générer des variations. Par exemple, le terme "Bonjour" peut-être encodé de la manière suivante : 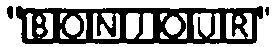 .

Selon, un exemple un encodage permettant des code type césar, de l'hexadécimal, du « leetspeak », également appelé : « langage de l'élite » et correspondant à un système d'écriture utilisant les caractères alphanumériques ASCII d'une manière peu compréhensible pour le néophyte pour s'en démarquer, peuvent être utilisés pour générer des variations du message.

Selon un autre exemple, un algorithme visant à exécuter une fonction de type « tactique » peut être mise en oeuvre dans le procédé de l'invention. Une telle fonction tactique consiste à utiliser une description prédéfinie accompagnée d'exemples pour produire des variations automatiquement. Selon un exemple, le procédé met en œuvre un LLM de variation pour modifier le message M₁ afin qu'il utilise la tactique sélectionnée. Selon un exemple, ces tactiques peuvent être configurées à partir de la littérature scientifique, et être éventuellement enrichies par des données caractérisant des vulnérabilités identifiées d'un LLM.

### Enregistrement des variations et filtrage

L'ensemble des variations VARᵢ produites du message M₁ peut être enregistré dans une mémoire ou une base de données pour être exploité dans un second temps lors du test du LLMₜ à tester. Selon un mode de réalisation, un filtrage est réalisé de sorte à conserver les variations les plus différenciantes les unes des autres ou pour écarter certaines variations lorsqu'une variation est trop proche du message M₁ d'origine. Selon un mode de réalisation, un nombre prédéfini de variations est configuré afin de limiter les ressources de calcul lors du test du grand modèle de langage à tester LLMₜ.

Le filtre peut par exemple consister en des comparaisons des différentes variations et d'une mesure d'un indicateur de similarité par exemple selon le nombre de symboles discrets différents d'une variation à une autre variation. D'autres possibilités peuvent être mises en œuvre pour filtrer une partie des variations afin de conserver pour la phase de test qu'un nombre limité de variations.

### Génération des réponses de l'agent conversationnel à tester

Selon un mode de réalisation, le procédé de l'invention comprend une étape de transmission d'une pluralité de variations VARᵢ à un agent conversationnel à tester LLMₜ pour produire une pluralité de réponses produite par l'agent conversationnel à tester LLMₜ. Chaque réponse produite de l'agent conversationnel à tester LLMₜ constitue une réponse qui fait l'objet d'un test unitaire grâce au procédé de l'invention. Les tests peuvent être réalisés de manière séquentielle ou être parallélisés de sorte qu'une pluralité d'instances de l'agent conversationnel soit produite.

Le procédé de l'invention comprend une étape de génération, notée GEN₃ sur la figure 1, d'une pluralité d'échanges de messages comportant la variation VARᵢ et la réponse associée REPᵢ par application d'un grand modèle de langage à tester LLMₜ.

L'ensemble formé par une variation VARᵢ et la réponse produite par l'agent conversationnel LLMₜ à tester est noté une séquence SEQᵢ.

Le procédé de l'invention comprend une étape de test visant à produire deux indicateurs notés IND₁ et IND₂ permettant de tester l'agent conversationnel LLMₜ.

Un premier indicateur IND₁ généré est un indicateur d'erreur factuelle dans la séquence. Le seconde indicateur IND₂ généré est un indicateur de conformité de la séquence.

### Indicateur d'erreur

Selon un mode de réalisation, l'indicateur d'erreur IND₁ vise à mesurer dans quelle mesure l'agent conversationnel produit une réponse erronée, fausse ou incohérente ou encore une réponse produite par une hallucination ou confabulation.

A cette fin, un premier grand modèle de langage d'évaluation LLMₑ peut être utilisé de sorte à vérifier les sorties produites par ce grand modèle d'évaluation LLMₑ avec les sorties produites par le grand modèle de langage à tester LLMₜ à partir des mêmes variations en entrée. Ainsi, dans ce cas le LLMᵥₖ produit une séquence comportant une variation et une réponse, la séquence est notée SEQ_{VARi} et la réponse est comparée avec celle du modèle à tester LLMₜ.

Les tests visant à produire ou non un indicateur d'erreur sont notés TEST₁ sur la figure 1.

Dans ce dernier cas, le prompt ou le contexte d'un tel grand modèle de langage d'évaluation LLMₑ peut être prédéfini. Selon un mode de réalisation, une pluralité de grands modèles de langage d'évaluation LLMₑ, et donc le cas échéant une pluralité de grands modèles de langage de variation LLMᵥₖ, peuvent être configurés pour tester selon différents critères le grand modèle de langage à tester LLMₜ.

Selon un mode de réalisation, afin de produire ou non un indicateur d'erreur IND₁, le procédé de l'invention comprend une étape de vérification qu'un ensemble de concepts en commun sont présents dans la réponse produite par le grand modèle de langage à tester LLMₜ et dans le grand modèle de langage de variation LLMᵥₖ.

L'ensemble de concepts peut être prédéterminé ou produits à partir d'un domaine sémantique donné ou encore produit par un grand modèle de langage de domaine LLM₂ auquel une variation du premier message M₁ a été fournie, ce dernier ayant été configuré avec un prompt ou un contexte donné dans l'objectif de fournir une liste de domaines ou de champs sémantiques. Un intérêt de cette dernière solution est de disposer d'un LLM entrainé sur des données différentes que le grand modèle de langage à tester LLMₜ.

Ainsi, il est possible de vérifier qu'un ensemble de concepts attendus sont présents dans la réponse du grand modèle de langage à tester LLMₜ.

Selon un autre exemple, l'indicateur d'erreur IND₁ est produit en calculant un indice de similarité entre une réponse produite par un grand de variation LLMᵥₖ et les réponses produites par le grand modèle de langage à tester LLMₜ à partir d'une même variation considérée en entrée des deux modèles LLMᵥₖ et LLMₜ. Un grand modèle de langage d'évaluation LLMₑ peut être configuré pour produire l'indice de similarité à partir d'une comparaison réalisée entre les deux sorites des deux modèles LLMᵥₖ et LLMₜ.

Selon un autre mode de réalisation, un score de similarité peut être calculés à partir d'un score de similarité basé sur les différences et les similarités des deux chaines de caractères produites ou plus généralement les deux séquences de symboles discrets en langage naturel produites par les deux modèles LLMᵥₖ et LLMₜ.

Un score de similarité permet d'évaluer à quel point les réponses produites par les deux modèles sont similaires ou éloignées. Un indicateur d'erreur IND₁ peut être produit dès lors qu'un seuil de l'indice de similarité est dépassé.

D'autres comparables peuvent être configurés de sorte à produire un indicateur d'erreur IND₁ pour chaque réponse produite du LLMₜ à partir d'une variation VARᵢ.

Le procédé de l'invention permet dans un second temps de produire une action automatique en fonction de la génération de l'indicateur d'erreur IND₁.

### Indicateur de conformité

Selon un mode de réalisation, l'indicateur de conformité IND₂ vise à mesurer dans quelle mesure l'agent conversationnel LLMₜ produit une réponse REPᵢ conforme à un domaine prédéfini, dit domaine de conformité DOMc. Le domaine de conformité DOMc peut être défini par un ensemble de règles ou un ensemble de réponses de références produites par un autre grand modèle de langage dit de conformité.

Les tests visant à produire ou non un indicateur d'erreur sont notés TEST₂ sur la figure 1.

Selon un exemple, un ensemble de règles comprend la spécification d'une langue de réponse, la spécification de thématiques à exclure du champ de la réponse ou qu'un lien vers une ressource d'un réseau de données doit être présent dans un type de réponse donné.

Selon un mode de réalisation, le domaine de conformité DOMc est défini par un ensemble de règles générées par un LLM de conformité configuré pour délimiter un domaine de réponse. Selon un autre exemple le domaine de conformité est défini par le champ sémantique ou un ensemble de concepts produits dans les réponses qu'un LLM de conformité.

Selon un autre exemple, le domaine de conformité DOMc est défini à partir d'un ensemble de règles RGL₁ définissant des ensembles de validité de la réponse produite par un grand modèle de langage.

Selon un exemple, cet ensemble de règles RGL₁ définit des ensembles d'invalidité comprenant une base de connaissance listant un ensemble de thèmes, de catégories, de labels ou de mots clefs définissant chacun ou chacune une séquence de symboles discrets dans un langage naturel et éventuellement des variations de cette séquence.

### Génération d'actions, d'alertes.

Selon un mode de réalisation, lorsqu'au moins un indicateur d'erreur IND₁, IND₂, est généré, le procédé de l'invention comprend une étape visant à réaliser une action automatiquement. Selon un premier exemple, l'action correspond à la génération d'une notification, telle qu'une alerte.

Selon un mode de réalisation, des notifications sont produites dès lors qu'au moins un indicateur d'erreur ou au moins un indicateur de conformité est produit. Selon un autre exemple, une donnée restituant le nombre d'erreurs et/ou la statistique de survenance de ces erreurs est notifiée.

Selon un exemple, une notification est émise vers un serveur permettant d'administrer l'agent conversationnel et de tester ce dernier.

Selon un autre exemple, l'action est une réponse automatisée produite par l'agent conversationnel. Ce dernier peut par exemple générer une réponse de type : « *une erreur a été détecté dans notre conversation, pourriez-vous reformuler votre question ?* » *par exemple au sein d'une interface utilisateur.*

Selon un autre exemple, l'action générée automatiquement est une mise à jour de la prise en compte de nouvelles sources de données pour regénérer ou mettre à jour le prompt de l'agent conversationnel.

Selon un autre exemple, l'action est la génération d'une commande permettant d'actionner l'exécution d'un programme d'ordinateur visant par exemple à suspendre la mise en production de l'agent conversationnel ou de rebasculer la fonction d'assistance avec un humain ou encore toute autre fonction logicielle modifiant le fonctionnement de l'agent conversationnel.

### Système

La figure 2 représente un exemple d'infrastructure permettant de mettre en œuvre le procédé de l'invention. Un serveur SERV1 permet de calculer les indicateurs d'erreur et de conformité.

Selon un exemple d'architecture de l'invention, un second serveur est un serveur hébergeant au moins une source de données Si et le serveur SERV3 est un serveur permettant de restituer les valeurs des indicateurs de conformité et d'erreur au cours du temps, le dit serveurs SERV3 étant accessible depuis une console d'administration de la solution.

Le procédé de l'invention permet de tester un grand modèle de langage à partir de données endogène à une première ressource de données relatives à une organisation et comportant un système de gestion d'accès à cette première ressource et à partir de données exogène à cette première ressource, par exemple en exploitant des données d'une seconde ressource de données qui comprend soit un autre système de gestion de droits d'accès à la seconde ressource soit des données accessibles sans système de gestion de droits d'accès. Une ressource exogène peut être accessible via un protocole d'échange de données comme un protocole de transfert de fichier, un protocole de messagerie et de transfert de messages, un protocole d'accès à des ressources distantes, un protocole orienté service et API un protocole spécifiques à l'Internet des objets.

Pour les protocoles de transfert de fichier, on trouve par exemple les protocoles HTTP, HTTPS, FTP, FTPs, TFTP, WebDAV, SSH, Telnet, RDP, NFS, SMB/CIFS.

Pour les protocoles de messagerie et de transfert de messages, on trouve par exemple les protocoles SMTP, POP3, IMAP, MQTT, AMQP, XMPP.

Pour les protocoles d'accès à des ressources distantes, on trouve par exemple les protocoles SSH, Telnet, RDP, NFS, SMB/CIFS.

Pour les protocoles orientés services et API, on trouve par exemple les protocoles SOAP, REST, gRPC, GraphQL, JSON-RPC / XML-RPC.

Pour les protocoles spécifiques à l'Internet des objets, on trouve par exemple les protocoles CoAP, MQTT-SN, LwM2M.

Un avantage de l'invention est également de pouvoir combiner des ressources de données provenant de différents protocoles d'échange de données permettant d'adresser différents types de ressources de données. Selon un mode de réalisation, le procédé comprend une étape de réception de données provenant d'au moins deux sources de données exogènes au système comportant les ressources du LLM à tester, lesdites deux sources délivrant des données via deux protocoles d'échanges de données différents.

Selon un mode de réalisation, les données reçues des au moins deux sources proviennent de protocoles de deux types différents.

Il convient de noter que les différents aspects de l'invention décrits ici apportent une solution technique concrète et spécifique à un problème technique : garantir la robustesse et la fiabilité à long terme des grands modèles linguistiques (LLM) mis en œuvre dans les agents conversationnels. Le problème découle de la nature dynamique des sources de données, de la diversité des formes d'entrée et de la dégradation potentielle des performances due à l'évolution des facteurs linguistiques ou contextuels. La méthode décrite aborde systématiquement ce problème en générant automatiquement des tests à l'aide d'une pluralité de modèles linguistiques de variation configurés avec des contextes et des règles spécifiques. Cette approche structurée garantit que l'agent conversationnel reste précis et robuste dans différents domaines et pour différentes entrées utilisateur.

Il convient également de noter que la méthode décrite n'est pas une simple idée abstraite ; elle est mise en œuvre à travers un processus tangible impliquant des étapes et des composants spécifiques. Celles-ci comprennent l'extraction et la normalisation automatisées de données provenant de sources prédéfinies, la configuration de contextes LLM pour la génération de variations et l'application d'un mécanisme d'évaluation secondaire utilisant des modèles d'évaluation indépendants. Dans une mise en oeuvre, la méthode utilise une architecture système comprenant plusieurs serveurs (SERV1, SERV2, etc.) qui sont explicitement configurés pour exécuter des fonctions de calcul et d'évaluation distinctes, démontrant ainsi un cadre technologique concret et spécifique permettant d'obtenir les résultats souhaités.

Divers aspects de l'invention apportent une amélioration notable dans le domaine technique des agents conversationnels en renforçant leur capacité à répondre efficacement à des contextes de données dynamiques et évolutifs.

Par exemple :
La méthode automatise la génération de divers scénarios de test, permettant une évolutivité dans l'évaluation des agents conversationnels sans intervention manuelle ;
En utilisant des modèles d'évaluation indépendants pour recouper les résultats, certains aspects de l'invention réduisent considérablement les cas d'erreurs, d'hallucinations ou de réponses incohérentes, garantissant ainsi la fiabilité ;
L'utilisation de modèles linguistiques variés adaptés à des domaines spécifiques et à des nuances linguistiques permet à l'agent conversationnel de s'adapter de manière dynamique aux diverses exigences des utilisateurs ;
Les améliorations techniques garantissent que les agents conversationnels fournissent des réponses cohérentes, fiables dans leur contexte et précises, ce qui profite directement aux utilisateurs finaux.

Les aspects de l'invention sont liés à la mise en œuvre technologique impliquant des intégrations matérielles et logicielles spécifiques. Dans une mise en œuvre, le système utilise des serveurs de données interconnectés pour l'extraction, le traitement et le stockage des données, combinés à des modèles computationnels fonctionnant dans des environnements distincts. L'utilisation de règles, d'invites et de configurations prédéfinies pour générer, tester et évaluer les résultats des modèles démontre une application spécifique et non générique de la technologie d'IA.

Prenons l'exemple d'une organisation qui utilise un agent conversationnel pour le service clientèle dans le domaine de l'assurance. L'invention divulguée garantit que l'agent peut s'adapter de manière dynamique aux mises à jour des politiques ou aux changements réglementaires en testant en permanence ses réponses par rapport à des ensembles de données en constante évolution. Par exemple, le système pourrait générer une requête test : « Puis-je demander le remboursement intégral d'une visite à l'hôpital dans le cadre du nouveau plan ? ». Des variantes de cette question, y compris des paraphrases, des changements linguistiques ou des changements de ton, sont testées, afin de garantir que la réponse de l'agent reste précise et fiable.

Un des effets techniques est d'objectiver la question afin de générer automatiquement une réponse fiable à un utilisateur qui est par exemple bloqué dans un process, ou pour l'assister dans une opération de maintenance, pour apporter une réponse permettant de surmonter un obstacle. Un des effets techniques est de s'abstraire la couche d'interprétation sémantique du langage en multipliant les variations possibles de questions. Un des intérêts de l'invention est donc d'aller au-delà de toute interprétation sémantique d'une question posée par un humain à laquelle une machine doit répondre sur la base de ressources de données.

Dans un ou plusieurs modes de réalisation, le dispositif permettant d'exécuter les modèles linguistiques variés est mis en œuvre grâce à une architecture de serveurs distribués comprenant :
Un serveur de données principal (SERV1), qui est chargé de recevoir, de stocker et de prétraiter les ensembles de données extraits de diverses sources. Ce serveur normalise et formate les données d'entrée, les préparant pour le traitement du modèle, et
Un serveur de modèles de variation (SERV3) équipé de processeurs spécialisés et de ressources mémoire, ce serveur exécute les modèles linguistiques de variation (LLMvk). Chaque LLMvk est paramétré pour générer des variations spécifiques telles que des paraphrases, des traductions, des ajustements de ton et des modifications linguistiques. Ces modèles fonctionnent sur la base d'invites contextuelles distinctes configurées pour chaque type de variation.

Dans un ou plusieurs modes de réalisation, le système comprend des unités de calcul dédiées, telles que des GPU ou des TPU, optimisées pour l'exécution de modèles d'apprentissage profond. Ces unités peuvent être hébergées dans SERV3 et exécuter les modèles linguistiques de variation, en tirant parti du traitement parallélisé pour traiter simultanément plusieurs entrées de test. Chaque unité de calcul peut appliquer des poids de modèle entraînés sur des ensembles de données spécifiques à un domaine, générer des sorties par le biais d'une séquence de calculs matriciels et de prédictions au niveau des tokens, et optimiser la génération de réponses en appliquant des contraintes prédéfinies et des algorithmes de vérification d'erreurs pendant l'exécution.

Le dispositif d'exécution des modèles de variation peut comprendre des modules logiciels conçus pour charger des modèles linguistiques de variation pré-entraînés en mémoire, configurer dynamiquement les invites, appelés généralement « prompts », du modèle, permettant ainsi la personnalisation des sorties en fonction des exigences linguistiques, culturelles ou spécifiques au domaine. (par exemple, un module de contexte peut introduire des mots-clés ou des champs lexicaux prédéfinis dans l'invite afin de garantir la pertinence par rapport à un domaine donné) et gérer les pipelines d'exécution des modèles, où les sorties d'un modèle de variation (par exemple, LLMvk pour la paraphrase) alimentent un autre modèle de variation (par exemple, LLMvk pour la modulation de ton) afin de produire des variations en cascade.

Dans un ou plusieurs modes de réalisation, chaque modèle est configuré avec sa fonction unique, telle que, par exemple :
LLMv1 pour la paraphrase : LLMv1 génère des reformulations sémantiquement équivalentes des requêtes de test ;
LLMv2 pour la traduction : LLMv2 convertit les requêtes d'entrée en différentes langues, en respectant les nuances grammaticales et contextuelles spécifiées ;
LLMv3 pour l'exagération : LLMv3 amplifie des aspects spécifiques des données d'entrée, tels que l'accentuation de l'urgence ou de l'intensité émotionnelle, et
LLMv4 pour l'ajustement du ton : LLMv4 modifie le ton pour l'adapter à des scénarios prédéfinis, tels que des styles de communication formels ou informels.

Dans un ou plusieurs modes de réalisation, le dispositif permettant d'exécuter les modèles linguistiques de variation peut utiliser une infrastructure cloud évolutive, telle que, par exemple, des serveurs hébergés dans le cloud qui allouent dynamiquement des ressources informatiques pour exécuter des instances LLMvk, des clusters de machines virtuelles qui fournissent une redondance et une évolutivité permettant de traiter de grands volumes de données de test, et des environnements conteneurisés qui garantissent la reproductibilité et l'isolation des différents modèles linguistiques pendant l'exécution.

L'expression « et/ou », telle qu'elle est utilisée dans la présente description et dans les revendications, doit être comprise comme signifiant « l'un ou l'autre ou les deux » des éléments ainsi joints, c'est-à-dire des éléments qui sont présents de manière conjointe dans certains cas et de manière disjointe dans d'autres cas. Les éléments multiples énumérés avec « et/ou » doivent être interprétés de la même manière, c'est-à-dire « un ou plusieurs » des éléments ainsi joints. D'autres éléments peuvent éventuellement être présents en plus des éléments spécifiquement identifiés par la clause « et/ou », qu'ils soient liés ou non aux éléments spécifiquement identifiés.

Une personne versée dans l'art comprendra facilement que diverses caractéristiques, éléments et paramètres décrits dans la description peuvent être modifiés et que divers modes de réalisation décrits peuvent être combinés sans s'écarter de la portée de l'invention. Par exemple, divers aspects de la présente divulgation peuvent être utilisés seuls, en combinaison ou dans une variété d'agencements non spécifiquement décrits dans les modes de réalisation décrits ci-dessus et ne sont donc pas limités dans leur application aux détails et à l'agencement des composants exposés dans la description ci-dessus ou illustrés dans les dessins. Par exemple, les aspects décrits dans un mode de réalisation peuvent être combinés de n'importe quelle manière avec les aspects décrits dans d'autres modes de réalisation.

## Revendications

1. Procédé mis en œuvre par ordinateur pour tester la performance d'un grand modèle de langage (LLMt) mis en œuvre au sein d'un agent conversationnel comportant :
▪ Réception d'un ensemble de données (ENS₁) provenant d'au moins une source de données (Si), lesdites données correspondant à un encodage de séquences de symboles discrets en langage naturel, l'ensemble de données (ENS₁) étant préalablement extrait d'au moins la source de données (Si) automatiquement selon une fréquence donnée (TEMP₁) et à partir d'une sélection d'une langue naturelle (LG₁);
▪ Génération (GEN₁) d'au moins un premier message de test (M₁) à partir de l'ensemble de données reçues (ENS₁) et par application d'au moins un premier grand modèle de langage (LLM₁) configuré avec un contexte principal (CT₁) comportant une définition d'un langage et d'une instruction donnée propre à la source de données (Si) ;
▪ Génération (GEN₂) d'une pluralité de séquence de variations (SEQ_{VARi}) par application d'au moins une pluralité de grands modèles de langage de variations (LLMᵥₖ) configurés à partir d'une pluralité de contextes secondaires (CT₂ᵢ) permettant de générer d'une part les variations (VARᵢ) du premier message de test (M₁) et les réponses associées générées par au moins un grand modèle de langage ;
▪ Génération (GEN3) d'une pluralité de séquences de messages (SEQᵢ) par application d'un grand modèle de langage à tester (LLMt), une séquence de messages comportant une entrée et la sortie générée correspondante d'un grand modèle de langage ;
▪ Calcul (TEST₁) d'un premier indicateur d'erreur (IND₁) évaluant un ensemble de critères d'erreurs par comparaison des séquences produites par le grand modèle de langage à tester (LLMt) et des séquences de variations (SEQ_{VARi}) ;
▪ Calcul (TEST₂) d'un second indicateur de conformité (IND₂) à partir d'un domaine de conformité (DOMc) comportant des règles de conformité (RGL₁) définissant des ensembles de validité des séquences produites par le grand modèle de langage à tester (LLMt),
▪ Génération d'une alerte lorsqu'au moins un premier indicateur d'erreur et/ou un second indicateur de conformité est généré.

2. Procédé selon la revendication 1 **caractérisé en ce que** les réponses des séquences de variations (SEQ_{VARi}) sont générées par :
▪ la pluralité de grands modèles de langage de variations (LLMvk) et/ou ;
▪ au moins un grand modèle de langage d'évaluation (LLMₑ) considérant en entrée une variation produite par un grand modèle de langage de variation (LLMᵥₖ) et produisant en sortie une réponse associée.

3. Procédé selon l'une quelconque des revendications 1 à 2 **caractérisé en ce que** la source de données (Si) est sélectionnée préalablement à partir d'un localisateur de ressources uniformes (URL₁) au sein d'un réseau de données (NET₁) et d'un nom d'organisation permettant de sélectionner une sous partie des données accessibles depuis le localisateur de ressources uniforme, la fréquence prédéfinie étant utilisée pour sélectionner des données des sources de données (Si) publiées à partir d'une date donnée.

4. Procédé selon l'une quelconque des revendications 1 à 3 **caractérisé en ce que** la réception de données (ENS1) provient de l'une des sources de données **caractérisé par** :
▪ Une source de données accessibles depuis un réseau social à partir d'un procédé d'authentification ;
▪ Une source de données définissant des commentaires ou des avis d'une pluralité d'individus,
▪ Une source de données d'informations d'accès libre.
▪ une source de données définissant une ou plusieurs base(s) de données internes à une organisation telle qu'une base de produits ou d'articles, une base de services, ou encore une base de véhicules en stock ;
▪ une source de données définissant des données de conversations d'agent(s) conversationnel(s) enregistrées en production ou dans un environnement de test,
▪ une source de données définissant une documentation électronique.

5. Procédé selon l'une quelconque des revendications 1 à 4 **caractérisé en ce qu'**il comprend l'exécution d'un grand modèle de langage de traitement des données des sources (LLMs) afin de filtrer, formater et/ou normaliser les ensembles de données extraits des sources de données (Si).

6. Procédé selon l'une quelconque des revendications 1 à 5 **caractérisé en ce que** chaque séquence de messages (SEQᵢ) comprend une séquence de symboles en langage naturel définissant une question, ladite séquence de symboles en langages naturel étant produite à partir d'au moins un premier grand modèle de langage de variations (LLMᵥₖ) et d'une réponse produite par utilisation d'un grand modèle de langage à tester (LLMt).

7. Procédé selon l'une quelconque des revendications 1 à 6 **caractérisé en ce que** le contexte principal (CT₁) d'un premier grand modèle de langage de variations (LLM₁) comprend la définition d'un domaine associé à un champ lexical ou à un ensemble de mots clefs.

8. Procédé selon l'une quelconque des revendications 1 à 7 **caractérisé en ce que** :
▪ un premier grand modèle de langage de variations (LLMv₁) comprend un contexte configuré permettant de générer automatiquement une séquence de symboles discrets dans un langage naturel à partir d'une ou plusieurs paraphrases du premier message (M₁) et/ou ;
▪ un second grand modèle de langage de variations (LLM_{V2}) comprend un contexte configuré permettant de générer automatiquement une séquence de symboles discrets dans un langage naturel à partir d'une traduction du premier message (M₁) dans une autre langue naturelle et/ou ;
▪ un troisième grand modèle de langage de variations (LLM_{V3}) comprend un contexte configuré permettant de générer automatiquement une séquence de symboles discrets dans un langage naturel à partir d'une exagération du premier message (M₁) et/ou ;
▪ un quatrième grand modèle de langage de variations (LLM_{V4}) comprend un contexte configuré permettant de générer automatiquement une séquence de symboles discrets dans un langage naturel à partir d'un changement de ton du premier message (M₁) et/ou ;
▪ un cinquième grand modèle de langage de variations (LLM_{V5}) comprend un contexte configuré permettant de générer automatiquement une séquence de symboles discrets dans un langage naturel à partir d'une introduction d'au moins une insulte dans le premier message (M₁) et/ou ;
▪ un sixième grand modèle de langage de variations (LLM_{V6}) comprend un contexte configuré permettant de générer automatiquement une séquence de symboles discrets dans un langage naturel à partir d'une introduction d'au moins une erreur dans le premier message (M₁), ladite erreur étant par exemple une erreur d'orthographe ou grammaticale dans une langue naturelle.

9. Procédé selon l'une quelconque des revendications 1 à 8 **caractérisé en ce qu'**il comprend la génération d'une pluralité de variations du message (M₁) pour chaque grand modèle de variations de langage de variation (LLMᵢ).

10. Procédé selon l'une quelconque des revendications 1 à 9 **caractérisé en ce que** le domaine de conformité (DOMc) est défini à partir :
▪ d'un ensemble de réponses de références produites par un autre grand modèle de langage dit de conformité configuré à partir d'un contexte définissant un domaine de conformité et/ou ;
▪ des règles de conformité (RGL₁) définissant des ensembles de validité de séquences de symboles en langage naturel prédéfinies et/ou des ensembles d'invalidité de séquences de symboles en langage naturel prédéfinies.

11. Procédé selon l'une quelconque des revendications 1 à 10 **caractérisé en ce que** les règles de conformité (RGL₁) comprennent la spécification d'une langue de réponse, la spécification de thématique à exclure du champ de la réponse ou qu'un lien vers une ressource d'un réseau de données (NET₁) doit être présent dans un type de réponse donné et **en ce que** les règles de conformité (RGL₁) définissent des ensembles d'invalidité comprennent une base de connaissance listant un ensemble de thèmes, de catégories, de labels ou de mots clefs définissant chacun ou chacune une séquence de symboles discrets dans un langage naturel et éventuellement des variations de cette séquence.

12. Procédé selon l'une quelconque des revendications 1 à 11 **caractérisé en ce qu'**un critère d'erreur du premier indicateur d'erreur (IND₁) comprend une vérification qu'un ensemble de concepts en commun sont présents d'une part dans la réponse produite de la séquence de variation (SEQ_{VARk}) produite et d'autre part dans la réponse produite par le grand modèle de langage à tester (LLMt) auquel une variation du premier message (M₁) a été fournie et **en ce que** lorsqu'un indicateur d'erreur et/ou un indicateur de conformité est généré, une notification est émise automatiquement vers un serveur distant ou une ressource mémoire d'un équipement sur lequel est exécuté le procédé et /ou un compteur d'erreurs est généré pour produire une évaluation de l'agent conversationnel sur une période donnée.

13. Produit programme d'ordinateur comprenant des instructions qui, lorsqu'elles sont exécutées par un ordinateur, amènent celui-ci à exécuter le procédé selon l'une quelconque des revendications 1 à 12.

14. Support lisible par ordinateur sur lequel est stocké un programme d'ordinateur comprenant des instructions qui, lorsqu'elles sont exécutées par un ordinateur, amènent celui-ci à exécuter le procédé selon l'une quelconque des revendications 1 à 12.

15. Système comportant un terminal électronique utilisateur (PC₁) comportant une interface utilisateur, au moins un serveur de données (SERV₁) hébergeant toute ou partie d'une première source de données (Sᵢ), un second serveur de données (SERV₂) comportant au moins un calculateur et une mémoire au sein duquel le grand modèle de langue à tester (LLMₜ) est exécuté et au moins un troisième serveur de données (SERV₃) comportant des moyens pour exécuter un modèle de langage de variation (LLMᵥᵢ) et comportant un calculateur pour exécuter les étapes du procédé de l'une quelconque des revendications 1 à 12.
